# FASCICULE DE BREVET EUROPEEN

(11) **EP 3 324 327 B1**
(45) Date de publication et mention de la délivrance du brevet: **28.11.2018**
(21) Numéro de dépôt: 17165116.9
(22) Date de dépôt: 05.04.2017
(51) Int. Cl.: G06F 21/79, G06F 12/02, G06F 12/14

(54) **STOCKAGE DANS UNE MÉMOIRE NON VOLATILE**
SPEICHERUNG IN EINEM NICHT-FLÜCHTIGEN SPEICHER
STORAGE IN A NON-VOLATILE MEMORY

(30) Priorité: 16.11.2016 FR 1661108
(43) Date de publication de la demande: 23.05.2018
(73) Titulaire: STMICROELECTRONICS (ROUSSET) SAS, 13790 Rousset (FR); PROTON WORLD INTERNATIONAL N.V., 1831 Diegem (BE)
(72) Inventeur: PEETERS, Michael, 1320 TOURINNES-LA-GROSSE (BE); MARINET, Fabrice, 13790 CHATEAUNEUF LE ROUGE (FR); MODAVE, Jean-Louis, 1340 OTTIGNIES (BE)
(74) Mandataire: Cabinet Beaumont

(56) Documents cités:
- GB-A- 2 424 089
- US-A- 5 943 283
- US-A1- 2003 141 994
- US-A1- 2015 019 878

## Description

### Domaine

La présente description concerne de façon générale les circuits électroniques et, plus particulièrement, les circuits exploitant une mémoire non volatile. La présente description vise plus particulièrement la gestion du stockage d'information (données et programmes) dans une mémoire non volatile, plus particulièrement dans une mémoire flash.

### Exposé de l'art antérieur

Des circuits intégrés peuvent comprendre des circuits ou des informations (dites secrètes) qui sont considérés comme sensibles au vu de la sécurité des données qu'ils traitent, comme des clés d'authentification, des signatures, etc., ou des algorithmes qu'ils utilisent, comme des algorithmes de chiffrement ou de déchiffrement. De telles informations ne doivent pas être communiquées ni être détectables par des tiers ou par des circuits non autorisés. En particulier, on doit s'assurer que l'emplacement de ces informations dans une mémoire non volatile ne puisse pas être détecté.

Les techniques d'analyse du fonctionnement d'un circuit intégré sont de plus en plus performantes et les pirates (hackers) bénéficient de techniques d'analyses de plus ou plus poussées. En particulier, les attaques par canaux cachés (analyse de la consommation du circuit, de son rayonnement électromagnétique, etc.) sont de plus en plus performantes.

Le document US 5 943 283 décrit un processus de brouillage d'adresse dans une mémoire semiconductrice.

Le document US 2015/019878 décrit un appareil et un procédé pour chiffrement d'adresse mémoire.

Le document US 2003/141994 décrit un dispositif d'encodage d'adresse, un procédé d'encodage d'adresse et un programme d'encodage d'adresse.

Le document GB 2 424 089 décrit un dispositif de protection contre des attaques par canaux cachés dans un dispositif de traitement de données de type carte à microcircuit.

### Résumé

Il existe un besoin d'améliorer la protection des informations secrètes manipulées par un circuit électronique.

Il existe également un besoin qui soit plus particulièrement adapté aux mémoires flash qui présentent des contraintes particulières en termes de différence de granularité d'écriture, de lecture et d'effacement.

Un mode de réalisation pallie tout ou partie des inconvénients des techniques connues de protection des informations manipulées par un circuit intégré.

Un mode de réalisation prévoit plus particulièrement une solution adaptée aux mémoires flash.

Ainsi, un mode de réalisation prévoit un procédé de brouillage d'adresses dans une mémoire non volatile, organisée en pages, dans lequel :
la mémoire présente une granularité d'écriture de mots comportant un ou plusieurs octets ;
la mémoire comporte une granularité d'effacement de blocs comportant une ou plusieurs pages de plusieurs mots chacune ; et
des adresses logiques sont converties en adresses physiques en respectant les conditions suivantes :
   les adresses de données sont brouillées en respectant la structure des pages ;
   les adresses de code sont brouillées en respectant la structure des mots.

Selon un mode de réalisation, les adresses de code et de données sont en outre brouillées en respectant la structure des blocs.

Selon un mode de réalisation, des fonctions de brouillage d'adresses font intervenir des mots représentatifs de clés, identiques ou différentes pour toutes les fonctions.

Selon un mode de réalisation, le brouillage des adresses modifie les bits les plus significatifs représentatifs de l'adresse sans modifier les bits représentatifs de l'adresse du mot dans la page.

Selon un mode de réalisation, une fonction de brouillage des adresses de données modifie les bits les moins significatifs représentatifs de l'adresse sans modifier les bits représentatifs de l'adresse de page.

Selon un mode de réalisation, les blocs sont regroupés en groupes de blocs.

Selon un mode de réalisation, une fonction de brouillage des adresses de code modifie les bits les moins significatifs représentatifs de l'adresse sans modifier l'adresse des bits représentatifs de l'adresse du groupe de blocs.

Un mode de réalisation prévoit également un circuit électronique, comportant :
une unité de traitement ;
au moins une mémoire non volatile ; et
un circuit de brouillage d'adresses entre l'unité de traitement et la mémoire non volatile, adapté à mettre en oeuvre le procédé décrit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un circuit électronique du type auquel s'appliquent, à titre d'exemple, les modes de réalisation décrits ;
la figure 2 représente, de façon très schématique et sous forme de blocs, un mode de réalisation d'un circuit mémoire équipé d'un circuit de brouillage d'adresses ;
la figure 3 illustre, de façon très schématique, l'organisation de la mémoire en termes d'espace logique et d'espace physique ;
la figure 4 représente, de façon très schématique et sous forme de blocs, un mode de réalisation d'un circuit de brouillage d'adresses ;
la figure 5 représente un exemple de réalisation de la fonction de brouillage d'adresses de code ;
la figure 6 représente un exemple de réalisation d'une fonction de la figure 5 de traitement d'adresses de code ;
la figure 7 représente un exemple de réalisation d'une fonction de brouillage d'adresses de données ; et
la figure 8 représente un exemple de réalisation d'une fonction de brouillage d'adresses.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés.

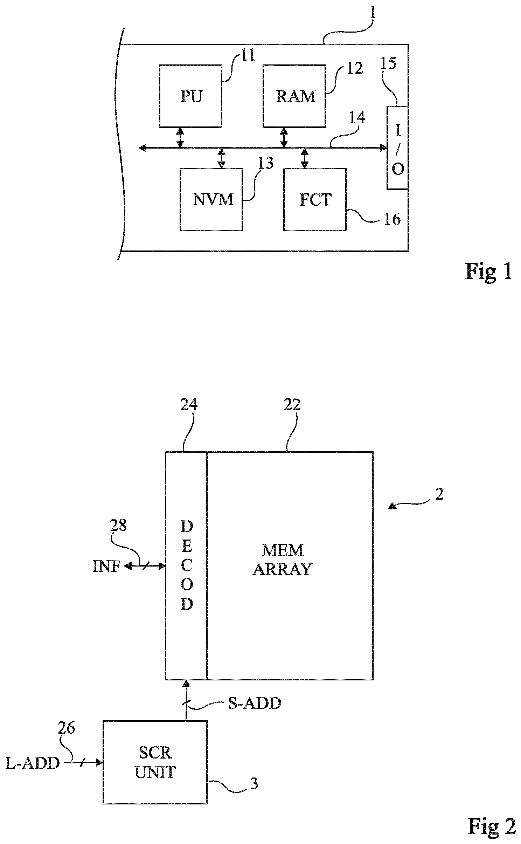

La figure 1 représente, de façon très schématique et sous forme de blocs, un mode de réalisation d'un circuit électronique 1 du type auquel s'appliquent, à titre d'exemple, les modes de réalisation qui vont être décrits.

Le circuit 1 comporte :
une ou plusieurs unités de traitement 11 (PU), par exemple une machine d'états, un microprocesseur, un circuit logique programmable, etc. ;
une ou plusieurs zones 12 (RAM) de stockage volatile, par exemple de type mémoire RAM ou registres, pour stocker temporairement des informations (instructions, adresses, données) pendant les traitements ;
une ou plusieurs zones 13 (NVM) de stockage non volatile (par exemple de type flash) pour stocker des informations de façon durable et en particulier quand le circuit n'est pas alimenté ;
un ou plusieurs bus 14 de données, d'adresses et/ou de commandes entre les différents éléments internes au circuit 1 ; et
une ou plusieurs interfaces d'entrée-sortie 15 (I/O) de communication, par exemple de type bus série, avec l'extérieur du circuit 1. Le cas échéant, le circuit 1 intègre également un circuit de communication sans contact (CLF - ContactLess Front-end), de type communication en champ proche (Near Field Communication - NFC).

Par ailleurs, le circuit 1 peut intégrer d'autres fonctions selon l'application, par exemple, un crypto-processeur, d'autres interfaces, d'autres mémoires, etc., symbolisées par un bloc 16 (FCT) en figure 1.

Le circuit 1 ou une partie de celui-ci incluant au moins une mémoire non volatile, des éléments de mémoire volatile et une unité d'exécution sont considérés comme sécurisés, c'est-à-dire que l'unité d'exécution peut extraire et stocker des informations dans la ou les mémoires de façon sécurisée et manipuler ces informations également de façon sécurisée.

Par contre, on doit s'assurer que les informations stockées dans la mémoire non volatile ne puissent pas être exploitées par un circuit ou une unité d'exécution non sécurisé.

Les modes de réalisation décrits prévoient d'organiser le stockage des informations dans la mémoire non volatile de façon particulière afin d'empêcher que les accès à la mémoire ne soient détectables par des attaques par canaux cachés. Selon un mode de réalisation préféré, on prévoit également d'empêcher qu'une lecture de ces informations par un circuit ou une unité non autorisée soit exploitable.

On décrira par la suite des exemples plus particulièrement appliqués à une mémoire flash. Toutefois, tous ces modes de réalisation s'appliquent plus généralement à toute mémoire non volatile.

Le stockage dans une mémoire non volatile fait appel à une interface ou décodeur d'adresses chargé de convertir des adresses logiques en adresses physiques. De façon simplifiée, les adresses logiques correspondent aux adresses exploitées par l'unité de traitement et les adresses physiques localisent l'emplacement physique des informations dans la mémoire.

Selon les modes de réalisation décrits, on prévoit de brouiller (scramble) les données et le code dans la mémoire de façon particulière pour rendre inexploitable des informations lues dans la mémoire par un circuit ou une unité ne possédant pas la règle d'organisation du stockage.

La figure 2 représente, de façon très schématique et sous forme de blocs, un mode de réalisation d'une mémoire 2 équipée d'un circuit de brouillage d'adresses.

La mémoire 2 comporte un plan mémoire 22 (MEM ARRAY) formé d'un réseau matriciel de cellules mémoire et un décodeur d'adresses 24 (DECOD) chargé de décoder des adresses logiques L-ADD reçues d'un bus d'adresses 26 en adresses physiques pour orienter des informations INF reçues sur un bus 28 (écriture) ou fournir des informations INF lues sur ce bus 28 (lecture) . On désigne habituellement le bus 28 "bus de données", ces données représentant le contenu stocké dans la mémoire. Toutefois, les modes de réalisation décrits différenciant, parmi ces données stockées, le code ou instructions (le ou les programmes et algorithmes à exécuter) et les données proprement dites ou variables, on désigne arbitrairement le bus 28 "bus d'informations" pour le distinguer du bus d'adresses.

Dans le mode de réalisation représenté en figure 2, un circuit 3 de brouillage d'adresses (SCR UNIT) intercepte les adresses logiques L-ADD afin de les brouiller avant de fournir des adresses brouillées S-ADD au décodeur d'adresses 24 qui convertit ces adresses brouillées S-ADD en adresses physiques. Ainsi, le décodeur 24 ne convertit pas directement les adresses logiques L-ADD mais des adresses (logiques) brouillées ou mélangées. Par conséquent, une lecture d'informations dans la mémoire à partir d'adresses logiques L-ADD directement décodées par le décodeur 24, sans passer par la loi de brouillage de l'unité 3, fournit des informations inexploitables car ne correspondant pas aux informations attendues.

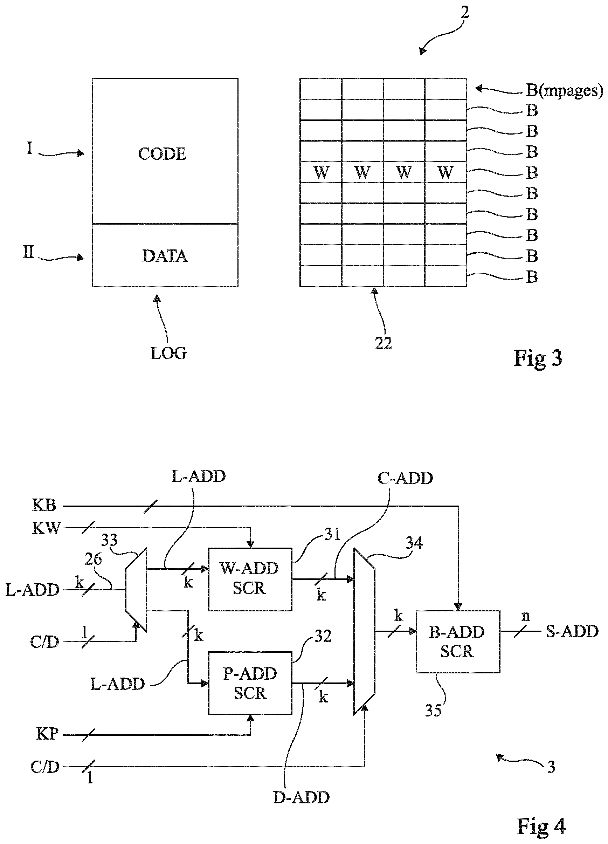

La figure 3 illustre, de façon très schématique, l'organisation de la mémoire 2 en termes d'espace logique et d'espace physique.

La mémoire logique LOG, c'est-à-dire l'espace mémoire logique en termes d'adresses, est divisée en deux régions I et II de tailles identiques ou différentes destinées à contenir respectivement du code ou instructions CODE (le ou les programmes et algorithmes à exécuter) et des données proprement dites DATA. Les données sont supposées évoluer, c'est-à-dire changer de valeur tandis que le code est censé être fixe, à l'exception de mises à jour du code lui-même. Les données correspondent par exemple à des variables, des valeurs, des valeurs d'adresses, des opérandes, etc.

Selon un mode de réalisation, on découpe la mémoire physique ou plan mémoire 22 (son adressage physique) en plusieurs blocs B d'une ou plusieurs pages, chaque page étant découpée en mots W d'un ou plusieurs octets. Le mot correspond à la granularité d'adressage physique pour écriture ou lecture des informations (données ou code) dans la mémoire. Le bloc B correspond à la granularité d'adressage physique pour effacement des informations dans la mémoire. En pratique, pour une mémoire flash, la granularité d'écriture et de lecture est l'octet et la granularité d'effacement est la page. Toutefois, pour optimiser l'adressage on peut regrouper, au niveau de l'adressage physique, plusieurs octets (un mot) pour l'écriture ou la lecture et plusieurs pages (un bloc) pour l'effacement.

On prévoit de brouiller de façon différente les adresses de code et les adresses de données. On tire ici profit du fait que le code est fixe, ce qui signifie qu'il n'a besoin d'être accédé qu'en lecture alors que les données sont variables et doivent donc pouvoir être écrites et également effacées. Ainsi, on prévoit de brouiller les adresses avec une granularité au niveau du mot pour le code et au niveau du bloc (ou en variante de la page) pour les données. Toutes les adresses de code et de données sont par ailleurs brouillées en respectant la structure de bloc.

La figure 4 représente, de façon très schématique et sous forme de blocs, un mode de réalisation du circuit 3 de brouillage d'adresses.

Selon ce mode de réalisation, le circuit 3 comporte deux unités ou fonctions 31 et 32 de brouillage d'adresses respectivement recevant les adresses logiques de code et les adresses logiques de données sans changer les adresses de région (I ou II). Fonctionnellement, le bus d'adresses 26 recevant les adresses logiques L-ADD (par exemple de l'unité de traitement 11) peut être envoyé sur un multiplexeur 33, un vers deux, chargé d'aiguiller les adresses vers l'une ou l'autre des unités 31 et 32. L'unité 31 (W-ADD SCR) brouille les adresses en respectant la structure des mots W, définissant la granularité la plus faible entre lecture et écriture dans la mémoire. L'unité 32 (P-ADD SCR) brouille les adresses en respectant la structure des pages P (en variante, des blocs) définissant la granularité d'effacement dans la mémoire. Le multiplexeur 33 est commandé par un signal C/D sur un bit identifiant la région logique I ou II, donc s'il s'agit d'une donnée ou de code. En variante, le multiplexeur 33 est omis et le bus d'adresse 26 est directement relié aux entrées d'adresses des unités 31 et 32.

Dans le mode de réalisation représenté, on mélange également les blocs, c'est-à-dire que les positions des blocs sont mélangées indépendamment du fait qu'ils contiennent des données ou du code. Fonctionnellement, un multiplexeur 34, deux vers un, reçoit les adresses brouillées par les unités 31 et 32 et les envoie sur une unité 35 (B-ADD SCR) de brouillages des adresses au niveau bloc, c'est-à-dire mélangeant la position des blocs dans l'espace de stockage. L'unité 35 fournit l'adresse brouillée S-ADD au décodeur 24 (figure 2). Le multiplexeur 34 est commandé par le signal C/D.

Dans un mode de réalisation simplifié, les adresses brouillées, fournies par le multiplexeur 34, sont fournies directement au décodeur d'adresses 24, c'est-à-dire que les blocs de données restent dans le même ordre et seuls l'ordre des pages dans chaque bloc est modifié, tandis que les positions des mots de code sont mélangées à l'intérieur de chaque bloc.

En supposant les adresses logiques croissantes dans l'espace logique, le signal C/D peut par exemple provenir d'une comparaison de l'adresse logique L-ADD par rapport à un seuil représentant la première adresse de la région II.

Les traitements opérés respectent la taille des adresses, par exemple de k bits.

La loi de brouillage mise en oeuvre par chaque unité 31, 32 ou 35 peut être identique ou différente pour chaque unité. Les lois de brouillage peuvent être prédéfinies, c'est-à-dire figées ou dépendre de clés de brouillage, respectivement KW, KP ou KB, identiques ou différentes les unes des autres. L'utilisation de clés de brouillage permet, par exemple, d'individualiser le brouillage d'un circuit à un autre.

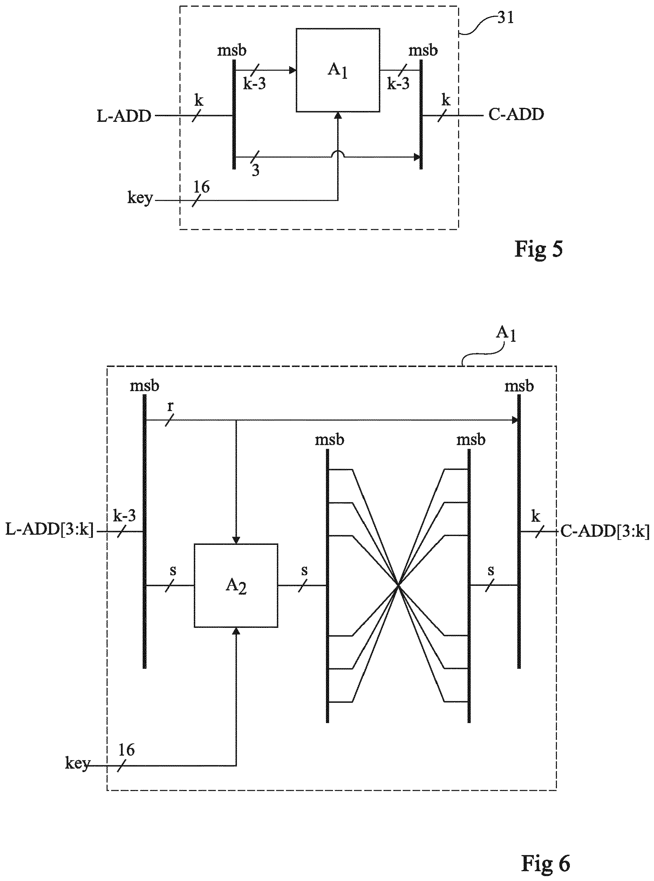

Les figures 5 à 8 représentent des exemples de réalisation des fonctions 31, 32 et 35 de brouillage d'adresses.

On suppose de façon arbitraire que les trois premiers bits d'adresses (les moins significatifs - lsb) identifient les octets dans un mot. Par exemple, en considérant des mots de code ou d'instruction de 64 bits, soit 8 octets, les trois bits de poids faibles de l'adresse identifient l'octet dans le mot et les k-3 bits d'adresse restants identifient donc le mot.

On suppose également que toutes les fonctions de brouillage exploitent une même clé key représentant les clés KB, KW et KP.

La figure 5 représente un exemple de réalisation de la fonction 31 de brouillage d'adresses de code.

Les k-3 bits les plus significatifs msb de l'adresse L-ADD sont envoyés sur une fonction A1 de brouillage du bloc tandis que les 3 bits les moins significatifs traversent l'unité 31 sans être modifiés. La fonction A1 reçoit la clé key, par exemple sur 16 bits afin de brouiller les k-3 bits les plus significatifs. Ainsi, les mots du code ayant des adresses successives dans la mémoire logique se retrouvent brouillés (répartis) dans plusieurs pages mémoire, de préférence en étant envoyés dans des blocs différents. Le brouillage s'applique sur les k-3 bits de poids forts. On a donc un brouillage de mots de 2^3=8 octets (64 bits). Le brouillage respecte la structure des mots, qui est la plus petite unité de lecture pour la mémoire.

Selon une variante de réalisation, on souhaite également se protéger contre des lectures non autorisées par un circuit externe, on prévoit de mélanger également les octets dans chaque mot. Pour cela, on ajoute un bloc recevant les trois bits de poids faible en entrée et fournissant trois bits brouillés en sortie. On peut, par exemple, utilisé, comme clé de brouillage des octets la clé key et les k-3 bits d'adresse de poids fort. Ainsi, les k-3 bits d'adresse sont également brouillés, le bit le plus significatif représentant le mot W.

La figure 6 représente un exemple de réalisation de la fonction A1 de la figure 5 de traitement des k-3 bits (L-ADD[3:k]) de l'adresse L-ADD.

On suppose que l'on prend en compte des groupes de blocs ou macro blocs. Par exemple, dans une mémoire de 2^k octets, il y a 2^r groupes de taille 2^s octets chacune. Dans k bits, les r bits les plus significatifs identifient le groupe et les s bits suivants (compris entre k-r et k-r-3) identifient l'octet dans la région.

On note que la taille de la mémoire n'est pas nécessairement une puissance de deux. Par exemple, on peut avoir R <= 2^r groupes de 2^s octets chacun. Dans ce cas, on construit une permutation sur un ensemble d'entiers (les adresses) de taille pas nécessairement égale à une puissance de 2, c'est-à-dire une fonction y=f(x) avec x et y pris dans l'ensemble de valeurs dans [0 ; R*2^s-1]. Il est cependant plus facile de construire un brouillage tel que représenté en figure 6 qui conserve la structure en groupes de blocs. Le bloc 35 de la figure 4 se charge d'étendre le brouillage sur tous les groupes, en respectant la structure en bloc.

Plus les groupes sont grands, meilleur est le brouillage mais cela réduit la granularité des zones mémoire qu'on peut prévoir. Par exemple, pour des groupes de 64 kilo-octets (s=16), en supposant que l'application a besoin de 130 kilo-octets, il faut prévoir une granularité de 192 kilo-octets.

Dans l'exemple de la figure 6, on utilise la valeur r, représentative du nombre de groupes comme valeur de diversification. Ces r bits ne sont pas modifiés par la fonction A1. Les s (ou k-3-r) bits restant sont combinés, par exemple par une fonction A2 de type OU-Exclusif, avec la clé key et les r bits, la clé et les r bits étant concaténés. La fonction A2 est un exemple particulièrement simple mais toute autre permutation aléatoire peut être prévue.

Une deuxième étape optionnelle de la fonction A1 consiste à permuter un à un les bits les plus significatifs avec les bits les moins significatifs. Le bit de rang k-3-r devient le bit de rang 4, le bit de rang k-r-1 devient le bit de rang 5, etc. jusqu'au bit de rang 4 qui devient le bit de rang k-3-r. Cette deuxième étape améliore la robustesse du brouillage opéré par la fonction A2 pour augmenter les chances que deux mots de code consécutifs soient dans des blocs différents.

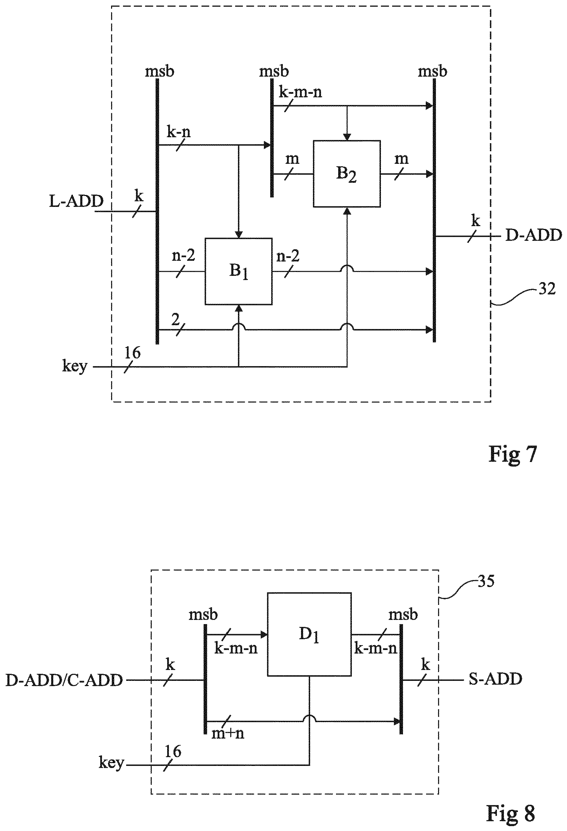

La figure 7 représente un exemple de réalisation de la fonction 32 de brouillage d'adresses de données.

Ici, on souhaite respecter, non seulement la structure de bloc mais également la structure de page afin d'être compatible avec un effacement par page. En effet, on aurait pu penser appliquer la même fonction que pour le code mais se poserait alors le problème que lors d'un effacement de page, il faudrait en fait sauvegarder temporairement toute la région II et effacer toutes les pages de cette région, ce qui est en pratique irréaliste.

Dans les modes de réalisations représentés, on suppose des pages de 2^n octets, et des blocs de 2^m pages. La taille de la mémoire est alors R*2^s octets (avec R <= 2^r). Il y a donc R*2^(s-m-n) blocs en mémoire. Selon un exemple particulier de réalisation n=9, m=2, s=15, k=18, et donc r=3.

On suppose, de façon arbitraire que les mots de code et les mots de données n'ont pas la même taille et que, par exemple, les mots de données sont sur 32 bits tandis que les mots de code sont sur 64 bits.

Selon cet exemple illustré par la figure 7, on considère que les deux bits les moins significatifs représentent l'adresse d'un octet dans un mot de données. Par conséquent, ces bits traversent la fonction 32 sans être modifiés.

Parmi les k-2 bits restants, les n-2 bits les moins significatifs représentant l'adresse du mot dans la page sont soumis à une fonction B1. Cette fonction B1 est, selon une réalisation simplifiée, une fonction de type OU-Exclusif avec les k-n bits les plus significatifs et la clé key.

Parmi, les k-n bits les plus significatifs de l'adresses L-ADD, les k-m-n bits sont par exemple laissés inchangés et les m bits restants sont soumis à une fonction B2, par exemple une fonction de type OU-Exclusif avec les m bits les plus significatifs et la clé key.

L'exemple de la figure 7 respecte la structure en mots de donnée (deux octets dans le même mot logique resteront dans le même mot physique), la structure en pages (deux mots dans la même page logique restent dans la même page physique) et la structure en bloc. La figure 7 ne brouille pas les blocs, c'est-à-dire que les k-m-n bits les plus significatifs ne sont pas brouillés.

La figure 8 représente un exemple de réalisation de la fonction 35 de brouillage (de permutation) des blocs.

Les adresses C-ADD et D-ADD issues des fonctions 31 et 32 sont soumises à un brouillage en respectant la structure des blocs. Ainsi les m+n bits les moins significatifs des k bits d'adresse ne sont pas modifiés tandis que les k-m-n bits les plus significatifs sont soumis à une fonction D1.

Un avantage des modes de réalisation qui ont été décrits est qu'ils permettent de brouiller les adresses de façon transparente, à la fois pour l'unité de traitement et pour le décodeur d'adresse de la mémoire.

Divers modes de réalisation ont été décrits. On notera que ces divers modes de réalisation et variantes peuvent être combinés. D'autres variantes et modifications apparaîtront à l'homme de l'art. Enfin, la mise en oeuvre pratique des modes de réalisation qui ont été décrits est à la portée de l'homme du métier à partir des indications fonctionnelles données ci-dessus. En particulier, bien que la description utilise un vocabulaire correspondant à une implémentation matérielle, une réalisation logicielle est possible.

## Revendications

1. Procédé de brouillage d'adresses dans une mémoire non volatile (2), organisée en pages (P), dans lequel :
la mémoire présente une granularité d'écriture de mots (W) comportant plusieurs octets ;
la mémoire (2) comporte une granularité d'effacement de blocs (B) comportant une ou plusieurs pages (P) de plusieurs mots chacune ; et
des adresses logiques (L-ADD) sont converties en adresses physiques en respectant les conditions suivantes :
les adresses de données sont brouillées (32) en respectant la structure des pages ; et
les adresses de code sont brouillées (31) en respectant la structure des mots.

2. Procédé selon la revendication 1, dans lequel les adresses de code et de données sont en outre brouillées (35) en respectant la structure des blocs (B).

3. Procédé selon la revendication 1 ou 2, dans lequel des fonctions (31, 32, 35) de brouillage d'adresses font intervenir des mots représentatifs de clés, identiques ou différentes pour toutes les fonctions.

4. Procédé selon l'une quelconque des revendications 1 à 3, dans lequel le brouillage des adresses modifie les bits les plus significatifs (k-3 ; k-2) représentatifs de l'adresse sans modifier les bits représentatifs de l'adresse du mot dans la page.

5. Procédé selon l'une quelconque des revendications 1 à 4, dans lequel une fonction (32) de brouillage des adresses de données modifie les bits les moins significatifs (n) représentatifs de l'adresse sans modifier les bits (n) représentatifs de l'adresse de page.

6. Procédé selon l'une quelconque des revendications 1 à 5, dans lequel les blocs sont regroupés en groupes de blocs.

7. Procédé selon la revendication 6, dans lequel une fonction (31) de brouillage des adresses de code modifie les bits les moins significatifs (k-r) représentatifs de l'adresse sans modifier l'adresse des bits (r) représentatifs de l'adresse du groupe de blocs.

8. Circuit électronique (1), comportant :
une unité de traitement (11) ;
au moins une mémoire non volatile (13) ; et
un circuit (3) de brouillage d'adresses entre l'unité de traitement et la mémoire non volatile, adapté à mettre en oeuvre le procédé selon l'une quelconque des revendications 1 à 7.

## Patentansprüche

1. Verfahren zum Scrambeln bzw. Verwürfeln von Adressen in einem nicht flüchtigen Speicher (2), der in Seiten (P) organisiert ist, wobei der Speicher eine Wortschreibgranularität (W) aufweist, die mehrere Bytes aufweist;
der Speicher (2) eine Blocklöschgranularität (B) aufweist, die eine oder mehrere Seiten (P) von jeweils mehreren Worten aufweist; und
logische Adressen (L-ADD) in physikalische Adressen umgewandelt werden, während die folgenden Bedingungen erfüllt werden;
die Datenadressen werden verwürfelt bzw. gescrambelt (32), während die Struktur der Seiten eingehalten wird; und
die Code-Adressen werden verwürfelt (31), während die Struktur der Worte eingehalten wird.

2. Verfahren nach Anspruch 1, wobei die Code- und Datenadressen weiter verwürfelt werden (35), während die Struktur der Blöcke (B) eingehalten wird.

3. Verfahren nach einem der Ansprüche 1 oder 2, wobei die Adressen-Scrambling- bzw. Adressen-Verwürfelungsfunktionen (31, 32, 35) die Verwendung von Worten beinhalten, welche Schlüssel, und zwar identisch oder unterschiedlich, für alle diese Funktionen darstellen.

4. Verfahren nach einem der Ansprüche 1 bis 3, wobei das Verwürfeln der Adressen die höchstwertigsten Bits (k-3; k-2), welche die Adresse darstellen, modifiziert, ohne die Bits zu modifizieren, welche die Adresse des Wortes innerhalb der Seite darstellt.

5. Verfahren nach einem der Ansprüche 1 bis 4, wobei eine Funktion (32) zum Verwürfeln der Datenadressen die niedrigstwertigen Bits (n) modifiziert, welche die Adresse darstellen, ohne die Bits (n) zu modifizieren, welche die Seitenadresse darstellen.

6. Verfahren nach einem der Ansprüche 1 bis 5, wobei die Blöcke in Gruppen von Blöcken angeordnet sind.

7. Verfahren nach Anspruch 6, wobei eine Funktion (31) zum Verwürfeln der Code-Adressen die niedrigstwertigen Bits (k-r) modifiziert, welche die Adresse darstellen, ohne die Adresse der Bits (r) zu modifizieren, welche die Adresse der Gruppe von Blöcken darstellen.

8. Elektronische Schaltung (1), die Folgendes aufweist:
eine Verarbeitungseinheit (11);
zumindest einen nicht flüchtigen Speicher (13); und
eine Adressen-Scrambling- bzw. Adressen-Verwürfelungsschaltung (3) zwischen der Verarbeitungseinheit und dem nicht flüchtigen Speicher, die so ausgelegt ist, dass sie das Verfahren nach einem der Ansprüche 1 bis 7 implementiert.

## Claims

1. Method for scrambling addresses in a non-volatile memory (2), organized in pages (P), in which:
the memory exhibits a word writing granularity (W) comprising several bytes;
the memory (2) comprises a block erasing granularity (B) comprising one or more pages (P) of several words each; and
logical addresses (L-ADD) are converted into physical addresses while complying with the following conditions:
the data addresses are scrambled (32) while complying with the structure of the pages; and
the code addresses are scrambled (31) while complying with the structure of the words.

2. Method according to Claim 1, in which the code and data addresses are furthermore scrambled (35) while complying with the structure of the blocks (B).

3. Method according to either of Claims 1 and 2, in which address scrambling functions (31, 32, 35) involve the use of words representative of keys, identical or different, for all the functions.

4. Method according to any one of Claims 1 to 3, in which the scrambling of the addresses modifies the most significant bits (k-3; k-2) representative of the address without modifying the bits representative of the address of the word within the page.

5. Method according to any one of Claims 1 to 4, in which a function (32) for scrambling the data addresses modifies the least significant bits (n) representative of the address without modifying the bits (n) representative of the page address.

6. Method according to any one of Claims 1 to 5, in which the blocks are assembled into groups of blocks.

7. Method according to Claim 6, in which a function (31) for scrambling the code addresses modifies the least significant bits (k-r) representative of the address without modifying the address of the bits (r) representative of the address of the group of blocks.

8. Electronic circuit (1), comprising:
a processing unit (11);
at least one non-volatile memory (13); and
an address scrambling circuit (3) between the processing unit and the non-volatile memory, designed to implement the method according to any one of Claims 1 to 7.
